(19) Europäisches Patentamt

European Patent Office

Office européen des brevets

(11) **EP 3 321 105 B1**

(12) **EUROPEAN PATENT SPECIFICATION**

(45) Date of publication and mention of the grant of the patent:
**30.10.2019  Bulletin 2019/44**

(21) Application number: **16821477.3**

(22) Date of filing: **08.07.2016**

(51) Int Cl.:
**B60C 11/13** *(2006.01)*       **B60C 9/18** *(2006.01)*
**B60C 11/03** *(2006.01)*

(86) International application number:
**PCT/JP2016/070224**

(87) International publication number:
**WO 2017/007009 (12.01.2017 Gazette 2017/02)**

(54) **TIRE FOR CONSTRUCTION VEHICLE**

REIFEN FÜR BAUFAHRZEUG

PNEU POUR VÉHICULE DE CONSTRUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.07.2015  JP 2015137670**

(43) Date of publication of application:
**16.05.2018  Bulletin 2018/20**

(73) Proprietor: **Bridgestone Corporation Tokyo 104-8340 (JP)**

(72) Inventor: **HASEGAWA, Tomoo Tokyo 104-8340 (JP)**

(74) Representative: **Oxley, Robin John George Marks & Clerk LLP 15 Fetter Lane London EC4A 1BW (GB)**

(56) References cited:
**EP-A1- 0 600 177       JP-A- H07 117 414
JP-A- H08 197 910       JP-A- 2013 119 282
JP-A- 2013 220 713      JP-A- 2013 220 719
JP-A- 2014 168 990      JP-A- 2015 013 587
US-A- 5 759 313         US-A1- 2014 090 760**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Technical Field

The present invention relates to a construction vehicle tire including a tread part.

Background Art

Conventionally, in a tread part, a heavy load tire including a protection belt ply including two protection belts, a main crossed belt ply including two main crossed belts, and a small crossed belt ply including two small crossed belts is known (See Patent Literature 1).

In such a tire, the main crossed belt ply is arranged on the outer side of the small crossed belt ply in the tire radial direction. The protection belt ply is arranged on the outer side of the main crossed belt ply in the tire radial direction.

The angle formed by the cord constituting the small crossed belt ply and the tire circumferential direction is in the range of 4 to 10°. The angle formed by the cord constituting the main crossed belt ply and the tire circumferential direction is in the range of 18 to 35°. The angle formed by the cord constituting the protection belt ply and the tire circumferential direction is in the range of 22 to 33°.

Therefore, in the tread part of such a tire, an angle formed by the cord constituting each belt ply and the tire circumferential direction U is small in the region in the vicinity of the tire equator line (center region), as compared with a region in the vicinity of the end of the tire in the tire width direction (shoulder region). Attention is also drawn to the disclosures of US 2014/090760 A1, EP 0600177 A1 and US 5759313 A.

Citation List

Patent Literature

Patent Literature 1: WO 2013/157544

Summary of Invention

Technical Problem

In the above-described tire, the belt tension becomes small in a region where the angle formed by the cord constituting the belt ply and the tire circumferential direction is large. Therefore, such region shrinks greatly in the tire circumferential direction.

As a result, when the tire rotates, since the region in the vicinity of the end of the tire in the tire width direction in the tire circumferential direction shrinks greatly in the tire circumferential direction, the length of the region in the vicinity of the tire equator line in the tire circumferential direction is longer than that of the region in the vicinity of the end of the tire in the tire width direction in the tire circumferential direction.

Therefore, when the tire rotates, a force in the tire rotation direction (driving force) is generated in the region in the vicinity of the tire equator line, and a force opposite the tire rotation direction (braking force) is generated in the region in the vicinity of the end of the tire in the tire width direction. For this reason, a shearing force is generated near the boundary between both regions.

Further, in a case where a load is applied to such a tire after an inner pressure is applied, the degree of a deformation in the tire radial direction in the region in the vicinity of the tire equator line is different from that in the region in the vicinity of the end of the tire in the tire width direction. For this reason, a shearing force is generated near the boundary between both regions.

In particular, when the tire is mounted on the steering shaft, the shearing force is further increased by a force applied in the tire width direction due to the steering angle. In addition, when such the tire is mounted on a shaft on which a braking force acts, a shearing force is further increased by the braking force.

In particular, such a phenomenon is conspicuous in a heavy load tire configured so that the length of the land part in the tire width direction is 30% or more of the length of the tread part in the tire width direction.

In addition, such a phenomenon is conspicuous in, in particular, a construction vehicle tire among heavy load tires.

The present invention has been made in view of the above-described problems, and it is an object of the present invention to provide a construction vehicle tire in which uneven wear resistance is improved by suppressing a braking force generated in the vicinity of the end of the tire in the tire width direction at the time of tire rotation.

Solution to Problem

In order to solve above-mentioned problems, a construction vehicle according to an aspect of the present invention, having all the features of claim 1, includes a tread part. A land section is partitioned in plural by a circumferential groove extending in a tire circumferential direction, and a tread end of the tread part and a lateral groove extending in a curved shape along a tire width direction. The lateral groove on at least one side in the tire width direction with respect to a tire equator line includes an inflection point at which orientations of a concavity and a convexity with respect to the tire circumferential direction change progressively outward in the tire width direction. The lateral groove extends from the inflection point toward one side in the tire circumferential direction and toward an outer side in the tire width direction, and further extends toward the other side in the tire circumferential direction and toward the outer side in the tire width direction, so as the lateral groove to have a bent groove part that forms a curved convex land portion with respect to the one side in the tire circumferential direction.

Advantageous Effects of Invention

One aspect of the present invention provides a construction vehicle tire in which uneven wear resistance is improved by suppressing a braking force generated in the vicinity of the end of the tire in the tire width direction at the time of tire rotation.

Brief Description of Drawings

Fig. 1 is a cross-sectional view of a construction vehicle tire in the tire width direction along the tire radial direction according to an embodiment of the present invention.
Fig. 2 is an explanatory diagram illustrating a belt configuration of the construction vehicle tire according to the embodiment of the present invention.
Fig. 3 is a plan view illustrating a tread pattern in the construction vehicle tire according to the embodiment of the present invention.
Fig. 4 is a cross-sectional view of an inner lateral groove formed in the tread part of the construction vehicle tire according to the embodiment of the present invention.
Fig. 5 is a plan view illustrating variation of a tread pattern in the construction vehicle tire according to the embodiment of the present invention.

Description of Embodiments

Hereinafter, an embodiment of the present invention will be explained with reference to the attached drawings. In the following descriptions, same or similar parts are denoted by same or similar reference numerals; and the detailed description thereof is omitted as appropriate. Moreover, the embodiment described below is to show examples of embodying technical idea of the present invention, and various changes may be made in the technical idea of the present invention within the scope of the claims of the patent.

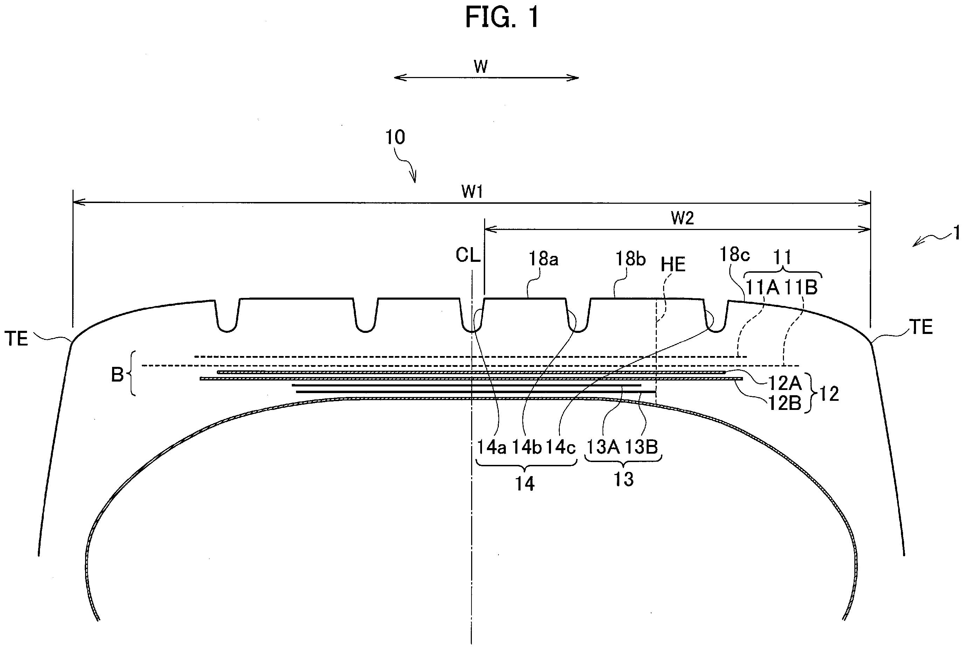

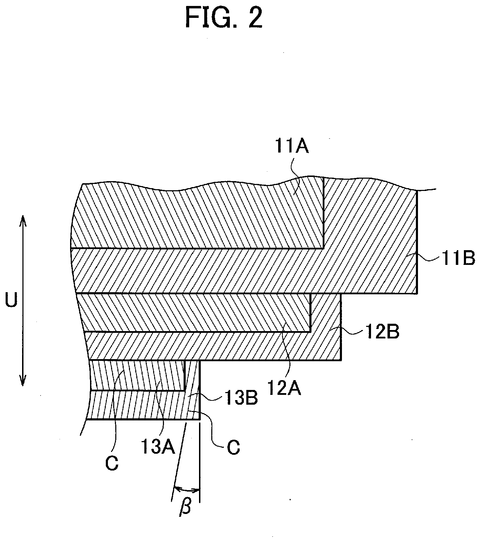

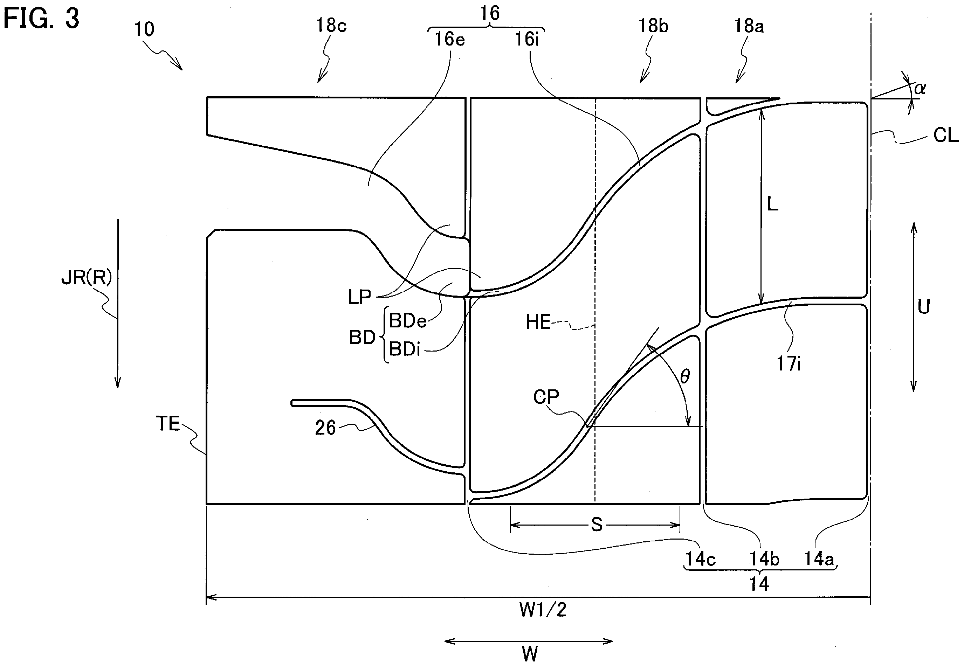

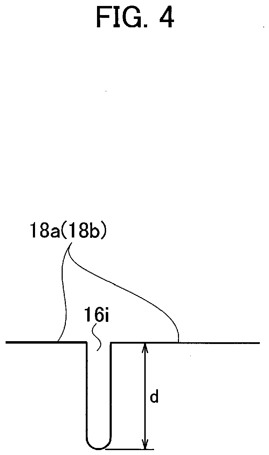

Fig. 1 is a cross-sectional view of a construction vehicle tire in the tire width direction along the tire radial direction according to an embodiment (hereinafter referred to as the present embodiment) of the present invention. Fig. 2 is an explanatory diagram illustrating a belt configuration of the construction vehicle tire according to the present embodiment. Fig. 3 is a plan view illustrating a tread pattern in the construction vehicle tire according to the present embodiment. In Fig. 3, in consideration of the drawing, the upper side of the space and the lower side of the space are drawn using not by a break line but by a straight line. Fig. 4 is a cross-sectional view of an inner lateral groove formed in the tread part of the construction vehicle tire according to the present embodiment.

As shown in Fig. 1, the construction vehicle tire 1 according to the present embodiment includes a plurality of belt plies. Specifically, as shown in Figs. 1 and 2, a tread part 10 of the construction vehicle tire 1 for according to the present embodiment includes a protection belt ply 11 including two protection belts 11A and 11B, a main crossed belt ply 12 including two main crossed belts 12A, 12B, and a small crossed belt ply 13 including two small crossed belts 13A, 13B.

As shown in Fig. 1 and Fig. 2, in the construction vehicle tire 1, the main crossed belt ply 12 is arranged on the outer side of the small crossed belt ply 13 in the tire radial direction. The protection belt ply 11 is arranged on the outer side of the main crossed belt ply 12 in the tire radial direction.

In the present embodiment, the angle $\beta$ (see Fig. 2) formed by the cord C constituting the small crossed belt ply 13 and a tire circumferential direction U is in the range of 4 to 10°, so that the small crossed belt ply 13 is constituted by a high angle belt. The angle formed by the cord constituting the main crossed belt ply 12 and the tire circumferential direction U is in the range of 18 to 35°. The angle formed by the cord constituting the protection belt ply 11 and the tire circumferential direction U is in the range of 22 to 33°.

As shown in Fig. 3, in the construction vehicle tire 1 according to the present embodiment, the tread part 10 includes a plurality of block rows partitioned by a circumferential groove 14 extending in the tire circumferential direction U or a tread end TE (the definition of the tread end is described later), which is the end of the tread part 10 in a tire width direction W, and a lateral groove 16 extending in the tire width direction W. Here, the circumferential groove 14 is constituted by a circumferential groove 14a extending along the tire circumferential direction on a tire equator line CL, a circumferential groove 14b located between a center land part 18a adjacent to the circumferential groove 14a and a second land part 18b arranged on the outer side of the center land part 18a in the tire width direction W, and a circumferential groove 14c located between the second land part 18b and a shoulder land part 18c.

Further, in the present embodiment, the lateral groove 16 includes an inner lateral groove 16i which is open to the circumferential groove 14a, extends to the outer side of the tire in the tire width direction, crosses the center land part 18a and the circumferential groove 14b, and crosses the second land part 18b to be open to the circumferential groove 14c, and an outer lateral groove 16e (lug groove) which is open to the circumferential groove 14c and crosses the tread end TE across the shoulder land part 18c. The groove width of the outer lateral groove 16e is caused to be wider than that of the inner lateral groove 16i.

In addition, both the inner lateral groove 16i and the outer lateral groove 16e extend in a curved line, and form no corner portion.

In the construction vehicle tire 1 according to the present embodiment, the length W2 of the lateral groove 16 in the tire width direction W is set to be not less than 30% of the length W1 of the tread part 10 in the tire width direction W, that is, the tread width.

The inner lateral groove 16i is inclined with respect to the tire width direction W so that a portion of the lateral groove 16 located on an outer side in the tire width direction grounds ahead from the tire equator line CL to the high angle belt end HE when the tire rotates in a tire normal rotation direction. The high angle belt end HE is the end of the belt having an angle of 10° or less formed by the cord constituting the belt ply and the tire circumferential direction, and in the present embodiment, the high angle belt end HE is the belt end of the small crossed belt ply 13 where the belt end extends along the tire circumferential direction U.

The inner lateral groove 16i has an inflection point CP at which the orientations of a concavity and a convexity with respect to the tire circumferential direction U change as the inner lateral groove 16i goes to the outer side of the tire in the tire width direction on at least one side of the tire equator line CL.

The lateral groove 16 extends by gradually increasing an inclination angle with respect to the tire circumferential direction U from the inflection point CP to the one side R of the tire in the tire circumferential direction and the outer side of the tire in the tire width direction so that the angle becomes close to 90°, and further extends to the other side of the tire in the tire circumferential direction (side opposite to the one side R of the tire in the tire circumferential direction) and the outer side of the tire in the tire width direction while gradually reducing the inclination angle with respect to the tire circumferential direction U, so that the lateral groove 16 has a bent groove part BD that forms a curved convex land portion LP with respect to the one side R of the tire in the tire circumferential direction. In the present embodiment, the inner half portion BDi of the bent groove part BD in the tire width direction is formed by the inner lateral groove 16i, and the outer half portion BDe of the bent groove part BD in the tire width direction is formed by the outer lateral groove 16e.

The end of the inner lateral groove 16i on the circumferential groove 14c side is open to the circumferential groove 14c so as to be parallel to the tire width direction W, and the end of the outer lateral groove 16e on the circumferential groove 14c side also is open to the circumferential groove 14c so as to be parallel to the tire width direction W. The inner lateral groove 16i and the outer lateral groove 16e are open to the circumferential groove 14c so that the groove wall positions on the one side R of the tire in the tire circumferential direction are aligned.

In addition, in the shoulder land part 18c, a second outer lateral groove 26 is formed at a position apart from the outer lateral groove 16e in the tire circumferential direction at a predetermined interval. The groove width of the second outer lateral groove 26 is narrower than that of the outer lateral groove 16e.

The second outer lateral groove 26 is open to the circumferential groove 14c. The second outer lateral groove 26 extends from the position that is open to the circumferential groove 14c to the other side of the tire in the tire circumferential direction and the outer side of the tire in the tire width direction so as to have a curved convex shape with respect to the one side R of the tire in the tire circumferential direction, and further is bent in the tire width direction and linearly extends along the tire width direction, and terminates in the shoulder land part 18c.

In addition, between the inner lateral grooves 16i adjacent to each other in the tire circumferential direction U, a second inner lateral groove 17i that has the same shape as the inner lateral groove 16i, is open to the circumferential groove 14c, and reaches the tire equator line CL is arranged. The opening position of the second outer lateral groove 26 into the circumferential groove 14c is set to be shifted to the other side of the tire in the tire circumferential direction from the opening position of the second inner lateral groove 17i into the circumferential groove 14c.

In the present embodiment, the one side R in the tire circumferential direction is taken as a tire normal rotation direction JR side. As a result, the bent groove part BD protrudes in a curved convex shape toward the tire normal rotation direction JR side of the tire.

Further, the small crossed belt ply 13 including two small crossed belts 13A, 13B, which is mentioned above, and is arranged, as a high angle belt, that is, a belt having an angle of 10° or less of the cord with respect to the tire circumferential direction, in a belt ply B arranged on the inner side of the tire in the tire radial direction relative to the tread part 10.

In a tread face view (planar view of the tread part 10), the inflection point CP is arranged in the tire width direction range S having 1/8 or less of the tread width W1 (more preferably 1/16 or less) with respect to the high angle belt end HE as the center in the width direction.

Here, the tread width is the "tread width" defined by JATMA YEAR BOOK. Further, the above-mentioned tread end refers to the outermost position in the tire width direction of the tire surface (tread surface) where the tire surface is in contact with the ground in a state in which the tire is assembled to the regular rim, filled with regular internal pressure, and the regular load is applied. The term "regular rim" refers to a standard rim as specified in the following standard according to the size of the tire, the term "regular internal pressure" refers to an air pressure corresponding to the maximum load capacity of a single wheel in the applicable size, which is described in the following standards, and the term "regular load" refers to the maximum load (maximum load capacity) of a single wheel in the applicable size of the following standards. The standard is an industrial standard that is effective in the area where the tire is produced or used, for example, "JATMA YEAR BOOK" of "Japan Automobile Tyre Manufacturers Association" in Japan, "YEAR BOOK" of "THE TIRE AND RIM ASSOCIATION INC." in the United States, and "STANDARD MANUAL" of "The European Tyre and Rim Technical Organisation" in Europe.

In the present embodiment, the maximum value of the angle θ formed by the inner lateral groove 16i with respect to the tire width direction W is in the range of 20 to 80°. In Fig. 3, the angle θ is the maximum at the inflection point CP.

Further, in the present embodiment, the angle α formed by the inner lateral groove 16i with respect to the tire width direction W at the intersection position of the tire equator line and the inner lateral groove 16i is in the range of 0 to 20°. In Fig. 3, the inner lateral groove 16i is drawn so that α is approximately 0°.

Further, the present embodiment is an embodiment of the construction vehicle tire 1, and the distance L (see Fig. 3) between the inner lateral groove 16i and the second inner lateral groove 17i adjacent to each other in the tire circumferential direction U and the groove depth d (depth along the tire radial direction, see Fig. 4) of the inner lateral groove 16i satisfy the following relationship.

$$d/L > 1/10$$

In a case where attention is paid to abrasiveness, the width of the circumferential groove 14 (length in the tire width direction W) is preferably 10 mm or less because the land parts support each other when a force is applied.

On the other hand, in a case where attention is paid to heat radiation property, the width of the circumferential groove 14 (length in the tire width direction W) is preferably larger than 10 mm.

Further, in the construction vehicle tire 1 according to the present embodiment, the circumferential pitch of the inner lateral groove 16i may be configured to be 50 mm or more.

(Effects)

The effects of the present embodiment will be described below.

The lateral groove 16 of the construction vehicle tire 1 according to the present embodiment has an inflection point CP that is open to the circumferential groove 14a and at which the orientations of a concavity and a convexity with respect to the tire circumferential direction U change as the lateral groove 16 goes to the outer side of the tire in the tire width direction. The lateral groove 16 extends from the inflection point CP to one side R of the tire in the tire circumferential direction and the outer side of the tire in the tire width direction, and further extends to the other side of the tire in the tire circumferential direction and the outer side of the tire in the tire width direction, so that the lateral groove 16 has a bent groove part BD forming a curved convex land portion with respect to the one side R of the tire in the tire circumferential direction.

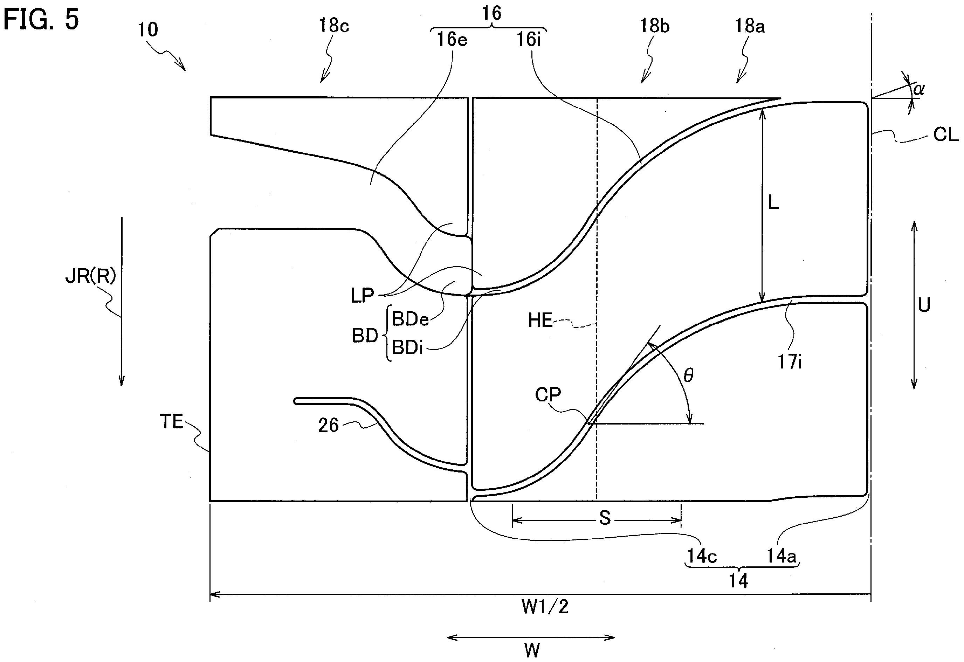

As a result, when the tire is rotated, the tire rubber flows in the tire rotation direction owing to the incompressibility of the tire rubber, so that the circumferential driving force occurs in the vicinity of the apex portion of the pattern, that is, the vicinity of the apex portion of one side R in the tire circumferential direction of the land portion partitioned by the bent groove part BD, and has an effect of canceling the braking force generated due to the tire structure. Accordingly, uneven wear is suppressed, so that the construction vehicle tire 1 with improved uneven wear resistance can be provided. As shown in Fig. 5, it is also possible to provide a configuration in which the circumferential groove 14b is not formed.

Further, the lateral groove 16 can have a curved shape as in the present embodiment, whereby it is possible to incline only part of the lateral groove 16 which is desired to incline with respect to the tire circumferential direction U. This makes it easier to ensure rigidity of the tire in the tire width direction. In addition, as compared with the case where the lateral groove 16 has a corner portion, the lateral groove 16 can have an increased inclination, so that the above-described circumferential driving force can be effectively increased.

In addition, in the present embodiment, the small crossed belt ply 13, which is a high angle belt, is arranged in the belt ply B arranged on the inner side of the tire in the tire radial direction relative to the tread part 10, and the inflection point CP is arranged in the tire width direction range having 1/8 or less of the tread width W1 with the high angle belt end HE as the center in the width direction in a tread face view. Therefore, the above-described circumferential driving force can be more effectively generated. Fig. 3 shows an example in which the position of the inflection point CP in the tire width direction is arranged somewhat on the outer side of the tire in the tire width direction relative to the high angle belt end HE, and a remarkable effect is provided in suppressing uneven wear at the 1/4 point.

In addition, in the present embodiment, the above one side R of the tire in the tire circumferential direction is set to be the tire normal rotation direction JR side of the tire. Therefore, it is possible to effectively generate the circumferential driving force at the time of the tire normal rotation.

In addition, the inner lateral groove 16i is inclined with respect to the tire width direction so that the portion of the lateral groove 16 located on the outer side in the tire width direction grounds ahead from the tire equator line CL to the high angle belt end HE when the tire rotates in a tire normal rotation direction. As a result, the above-described circumferential driving force can be more effectively increased.

In addition, the maximum value of the angle θ formed by the inner lateral groove 16i with respect to the tire width direction W is in the range of 20 to 80°. As a result, the above-described circumferential driving force can be effectively increased.

In addition, the angle α formed by the inner lateral groove 16i with respect to the tire width direction W at the intersection position of the tire equator line CL and the inner lateral groove 16i is in the range of 0 to 20°. This can effectively prevents the block rigidity from being impaired.

Industrial Applicability

The aspect of the present invention provides a construction vehicle tire in which uneven wear resistance is improved by suppressing a braking force generated in the vicinity of the end of the tire in the tire width direction at the time of tire rotation.

Reference Signs List

| 1 | CONSTRUCTION VEHICLE TIRE |
| 10 | TREAD PART |
| 13 | SMALL CROSSED BELT PLY (HIGH ANGLE BELT) |
| 14 | CIRCUMFERENTIAL GROOVE |
| 14a | CIRCUMFERENTIAL GROOVE |
| 14b | CIRCUMFERENTIAL GROOVE |
| 14c | CIRCUMFERENTIAL GROOVE |
| 16 | LATERAL GROOVE |
| B | BELT PLY |
| BD | BENT GROOVE PART |
| CL | TIRE EQUATOR LINE |
| CP | INFLECTION POINT |
| HE | HIGH ANGLE BELT END |
| LP | LAND PORTION |
| JR | TIRE NORMAL ROTATION DIRECTION |
| TE | TREAD END |
| R | ONE SIDE R OF TIRE IN TIRE CIRCUMFERENTIAL DIRECTION |
| U | TIRE CIRCUMFERENTIAL DIRECTION |
| W | TIRE WIDTH DIRECTION |
| W1 | TREAD WIDTH |
| θ | ANGLE |
| α | ANGLE |

**Claims**

1. A construction vehicle tire (1) comprising a tread part (10),
   wherein the tread part is partitioned in plural by a circumferential groove (14) extending in a tire circumferential direction (U), and at least one of a tread end (TE) of the tread part and a first lateral groove (16) extending in a curved shape along a tire width direction (W),
   wherein the first lateral groove on at least one side in the tire width direction with respect to a tire equator line (CL) includes an inflection point (CP) at which orientations of a concavity and a convexity with respect to the tire circumferential direction change progressively outward in the tire width direction, and extends from the inflection point toward one side in the tire circumferential direction (R) and toward an outer side in the tire width direction, and further extends toward the other side in the tire circumferential direction and toward the outer side in the tire width direction, so as the first lateral groove to have a bent groove part (BD) that forms a curved convex land portion (LP) with respect to the one side in the tire circumferential direction
   the tire further comprising a belt ply (B) disposed on an inner side in a tire radial direction of the tread, wherein a small crossed belt ply (13) constituted by a high angle belt is arranged in the belt ply, and wherein the inflection point (CP) is arranged in a tire width direction range having 1/8 or less of a tread width (W1) with a high angle belt end (HE) as a center in the width direction in a tread face view, wherein the high angle belt is a belt having an angle β of 10° or less with respect to the tire circumferential direction, where the angle β is formed by a cord constituting the belt ply and the tire circumferential direction, and
   the high angle belt end (HE) is a belt end of the small crossed belt ply (13) extending along the tire circumferential direction.

2. The construction vehicle tire (1) according to claim 1, wherein the first lateral groove (16) is inclined with respect to the tire width direction (W) so that a portion of the first lateral groove located on an outer side in the tire width direction grounds ahead from the tire equator line (CL) to the high angle belt end (HE) when rotating in a tire normal rotation direction (JR).

3. The construction vehicle tire (1) according to claim 1 or claim 2, wherein the one side in the tire circumferential direction (R) is a side in the tire normal rotation direction (JR).

4. The construction vehicle tire (1) according to any one of claims 1 to 3, wherein a maximum angle θ formed by the first lateral groove (16) with respect to the tire width direction (W) is in a range of 20° to 80°.

5. The construction vehicle tire (1) according to any one of claims 1 to 4, wherein at an intersection position of the tire equator line (CL) and the first lateral groove (16), an angle α formed by the first lateral groove with respect to the tire width direction is in a range of 0° to 20°.

**Patentansprüche**

1. Baufahrzeugreifen (1), beinhaltend einen Laufflächenabschnitt (10);

   wobei der Laufflächenabschnitt mehrfach durch eine Umfangsrille (14), welche sich in eine Reifenumfangsrichtung (U) erstreckt, und durch mindestens ein Element der Gruppe, bestehend aus einem Laufflächenende (TE) des Laufflächenabschnittes und einer ersten seitlichen Rille (16), welche sich in einer gekrümmten Form entlang einer Reifenbreitenrichtung (W) erstreckt, unterteilt wird,

   wobei die erste seitliche Rille an mindestens einer Seite in der Reifenbreitenrichtung in Bezug auf eine Reifenäquatorlinie (CL) einen ersten Umkehrpunkt (CP) enthält, an welchem sich die Ausrichtung eines konkaven Abschnittes und eines konvexen Abschnittes in Bezug auf die Reifenumfangsrichtung progressiv auswärts in der Reifenbreitenrichtung ändert, und sich vom Umkehrpunkt in Richtung einer Seite in der Reifenumfangsrichtung (R) und in Richtung einer äußeren Seite in der Reifenbreitenrichtung erstreckt, und sich zudem in Richtung der anderen Seite in der Reifenumfangsrichtung und in Richtung der äußeren Seite in der Reifenbreitenrichtung erstreckt, sodass die erste seitliche Rille einen gebogenen Rillenabschnitt (BD) besitzt, welcher einen gekrümmten konvexen Stegabschnitt (LP) in Bezug auf die eine Seite in der Reifenumfangsrichtung bildet,

   wobei der Reifen zudem eine Gürtellage (B) beinhaltet, welche an einer inneren Seite in der Reifenradialrichtung der Lauffläche angeordnet ist,

   wobei eine kleine gekreuzte Gürtellage (13), welche durch einen Gürtel mit einem hohen Winkel gebildet wird, in der Gürtellage angeordnet ist, und

   wobei der Umkehrpunkt (CP) in einem Reifenbreitenrichtungsbereich, welcher 1/8 oder weniger einer Laufflächenbreite (W1) beträgt, mit einem Ende des Gürtels mit einem hohen Winkel (HE) als einem Mittelpunkt in der Breitenrichtung, betrachtet in einer Laufflächen-Vorderansicht, angeordnet ist,

   wobei der Gürtel mit einem hohen Winkel ein Gürtel ist, welcher einen Winkel von 0 bis 10 oder darunter in Bezug auf die Reifenumfangsrichtung besitzt, wobei der Winkel 0 durch einen Kord, aus welchem die Gürtellage besteht, und der Reifenumfangsrichtung gebildet wird, und

   wobei das Ende des Gürtels mit einem hohen Winkel (HE) ein Gürtelende der kleinen gekreuzten Gürtellage (13) ist, welche sich entlang der Reifenumfangsrichtung erstreckt.

2. Baufahrzeugreifen (1) nach Anspruch 1, bei welchem die erste seitliche Rille (16) in Bezug auf die Reifenbreitenrichtung (W) in einer Weise geneigt ist, dass ein Abschnitt der ersten seitlichen Rille, welche an einer äußeren Seite in der Reifenbreitenrichtung befindlich ist, den Boden von der Reifenäquatorlinie (CL) bis zum Ende des Gürtels mit einem hohen Winkel (HE) beim Drehen in einer normalen Reifendrehrichtung (JR) zuerst berührt.

3. Baufahrzeugreifen (1) nach Anspruch 1 oder 2, bei welchem die eine Seite in der Reifenumfangsrichtung (R) eine Seite in der normalen Reifendrehrichtung (JR) ist.

4. Baufahrzeugreifen (1) nach einem der Ansprüche 1 bis 3, bei welchem ein maximaler Winkel 0, gebildet aus der ersten seitlichen Rille (16) in Bezug auf die Reifenbreitenrichtung (W), in einem Bereich von 20° bis 80° liegt.

5. Baufahrzeugreifen (1) nach einem der Ansprüche 1 bis 4, bei welchem an einer Schnittpunktposition der Reifenäquatorlinie (CL) und der ersten seitlichen Rille (16) ein durch die erste seitliche Rille in Bezug auf die Reifenbreitenrichtung gebildeter $\alpha$-Winkel in einem Bereich von 0° bis 20° liegt.

**Revendications**

1. Pneumatique pour véhicule de construction (1), comprenant une partie de bande de roulement (10) ; dans lequel :

   la partie de bande de roulement est partitionnée selon plusieurs sous-parties au moyen d'une rainure circonférentielle (14) qui s'étend suivant une direction circonférentielle de pneumatique (U), et au moins l'une d'une extrémité de bande de roulement (TE) de la partie de bande de roulement et d'une première rainure latérale (16) s'étendant selon une forme incurvée suivant une direction de largeur de pneumatique (W) ; dans lequel :

   la première rainure latérale sur au moins un côté suivant la direction de largeur de pneumatique par rapport à une ligne équatoriale de pneumatique (CL) inclut un point d'inflexion (CP) au niveau duquel des orientations d'une concavité et d'une convexité par rapport à la direction circonférentielle de pneumatique varient progressivement vers l'extérieur suivant la direction de largeur de pneumatique, et elle s'étend depuis le point d'inflexion en direction d'un côté suivant la direction circonférentielle de pneumatique (R) et en direction d'un côté externe suivant la direction de largeur de pneumatique, et elle s'étend en outre en direction de l'autre côté suivant la direction circonférentielle de pneumatique et en direction du côté externe suivant la direction de largeur de pneumatique, de manière à ce que la première rainure latérale comporte une partie de rainure fléchie (BD) qui forme une section de contact convexe incurvée (LP) par rapport au côté considéré suivant la direction circonférentielle de pneumatique ;

le pneumatique comprenant en outre une nappe de ceinture (B) qui est disposée sur un côté interne suivant une direction radiale de pneumatique de la bande de roulement ; dans lequel :

une petite nappe de ceinture croisée (13) qui est constituée par une ceinture d'angle élevé est agencée dans la nappe de ceinture ; et dans lequel :

le point d'inflexion (CP) est agencé à l'intérieur d'une plage de direction de largeur de pneumatique qui représente 1/8ème ou moins d'une largeur de bande de roulement (W1) avec une extrémité de ceinture d'angle élevé (HE) en tant que centre suivant la direction de largeur selon une vue de face de bande de roulement ; dans lequel :

la ceinture d'angle élevé est une ceinture qui présente un angle β de 10° ou moins par rapport à la direction circonférentielle de pneumatique, où l'angle β est formé par un câble qui constitue la nappe de ceinture et par la direction circonférentielle de pneumatique ; et

l'extrémité de ceinture d'angle élevé (HE) est une extrémité de ceinture de la petite nappe de ceinture croisée (13) qui s'étend suivant la direction circonférentielle de pneumatique.

**2.** Pneumatique pour véhicule de construction (1) selon la revendication 1, dans lequel la première rainure latérale (16) est inclinée par rapport à la direction de largeur de pneumatique (W) de telle sorte qu'une section de la première rainure latérale qui est située sur un côté externe suivant la direction de largeur de pneumatique est plaquée au sol en amont depuis la ligne équatoriale de pneumatique (CL) jusqu'à l'extrémité de ceinture d'angle élevé (HE) lors d'une rotation dans un sens de rotation normal de pneumatique (JR).

**3.** Pneumatique pour véhicule de construction (1) selon la revendication 1 ou la revendication 2, dans lequel le côté considéré suivant la direction circonférentielle de pneumatique (R) est un côté suivant le sens de rotation normal de pneumatique (JR).

**4.** Pneumatique pour véhicule de construction (1) selon l'une quelconque des revendications 1 à 3, dans lequel un angle maximum θ qui est formé par la première rainure latérale (16) par rapport à la direction de largeur de pneumatique (W) s'inscrit à l'intérieur d'une plage qui va de 20° à 80°.

**5.** Pneumatique pour véhicule de construction (1) selon l'une quelconque des revendications 1 à 4, dans lequel, au niveau d'une position d'intersection de la ligne équatoriale de pneumatique (CL) et de la première rainure latérale (16), un angle α qui est formé par la première rainure latérale par rapport à la direction de largeur de pneumatique s'inscrit à l'intérieur d'une plage qui va de 0° à 20°.

# FIG. 1

FIG. 2

FIG. 3

# FIG. 4

18a(18b)

16i

d

FIG. 5

EP 3 321 105 B1

**REFERENCES CITED IN THE DESCRIPTION**

**Patent documents cited in the description**

- US 2014090760 A1
- EP 0600177 A1
- US 5759313 A
- WO 2013157544 A